# EUROPEAN PATENT APPLICATION

(11) **EP 4 822 241 A1**
(43) Date of publication of application: **14.10.2026**
(21) Application number: 24900661.0
(22) Date of filing: 05.12.2024
(51) Int. Cl.: F17C 13/00, F16J 12/00, H01M 8/04

(54) **HYDROGEN TANK CONNECTING METHOD, AND HYDROGEN CONSUMPTION SYSTEM**

(30) Priority: 08.12.2023 JP 2023207607
(71) Applicant: TOYOTA JIDOSHA KABUSHIKI KAISHA, Toyota-Shi, Aichi-Ken 471-8571 (JP)
(72) Inventor: TOMI, Naoki, Toyota-shi, Aichi 471-8571 (JP); FUJIMURA, Yoshikatsu, Toyota-shi, Aichi 471-8571 (JP); KANEKO, Keiichi, Toyota-shi, Aichi 471-8571 (JP); TONOSAKO, Tetsuya, Toyota-shi, Aichi 471-8571 (JP); KATO, Kei, Toyota-shi, Aichi 471-8571 (JP); NAKASHIMA, Tomoki, Toyota-shi, Aichi 471-8571 (JP); SUGIURA, Koji, Toyota-shi, Aichi 471-8571 (JP)
(74) Representative: TBK
(86) International application number: PCT/JP2024/042976
(87) International publication number: WO 2025/121367

(57) **Abstract**

A hydrogen tank connection method for connecting a removable hydrogen tank to a hydrogen consuming apparatus, which is configured to suppress a connection failure between the connector of the hydrogen tank and that of the hydrogen consuming apparatus, the method comprises an approaching step of disposing the first and second connection parts to face each other in a separated state and a connecting step of connecting the separated first and second connection parts by reducing a distance therebetween after the approaching step, wherein, in the approaching step and the connecting step, the hydrogen tank is moved in an axial direction of the first and second connection parts by a moving part configured to move the hydrogen tank.

## Description

### Technical Field

The disclosure relates to a hydrogen tank connection method and a system configured to consume hydrogen supplied as fuel.

### Background Art

Patent Document 1 discloses a fuel tank which is detachably installed in a vehicle and which includes a columnar hydrogen tank body and a handle formed at one end side in the longitudinal direction of the hydrogen tank body. Also, Patent Document 1 mentions that the hydrogen tank includes the first connector which is formed at the other end side in the longitudinal direction of the hydrogen tank body 32 and which, when the hydrogen tank body is installed in the vehicle, is connected to the second connector provided in the vehicle to enable hydrogen to be supplied to the vehicle.

### Citation List

### Patent Document

Patent Document 1: Japanese Patent Application Laid-Open (JP-A) No. 2023-056952

### Summary

### Technical Problem

However, when the connector of a hydrogen tank and the connector of a hydrogen consuming apparatus are not on the same axis (i.e., when their axes are misaligned), there is a possibility that the connectors are poorly connected to each other and cause a connection failure such as a sealing failure. Due to the connection failure between the connector of the hydrogen tank and that of the hydrogen consuming apparatus, problems such as a hydrogen supply failure and a hydrogen blocking failure may occur, both of which are due to a failure in opening and closing the hydrogen tank.

In light of the above circumstances, an object of the present disclosure is to provide a hydrogen tank connection method and a hydrogen consumption system, both of which are configured to suppress a connection failure between the connector of the hydrogen tank and that of the hydrogen consuming apparatus.

### Solution to Problem

The present disclosure includes the following embodiments.
<1> A hydrogen tank connection method for connecting a first connection part of a removable hydrogen tank to a second connection part of a hydrogen consuming apparatus configured to consume hydrogen of the hydrogen tank,
   the method comprising an approaching step of disposing the first and second connection parts to face each other in a separated state and a connecting step of connecting the separated first and second connection parts by reducing a distance therebetween after the approaching step,
   wherein, in the approaching step and the connecting step, the hydrogen tank is moved in an axial direction of the first and second connection parts by a moving part configured to move the hydrogen tank.
<2> The hydrogen tank connection method according to the above <1>, wherein the movement of the hydrogen tank in the approaching step and the connecting step is limited by a movement inhibiting member configured to lock the moving part at a predetermined position.
<3> The hydrogen tank connection method according to the above <2>,
   wherein the moving part comprises an engaging recess that is engageable with the movement inhibiting member;
   wherein the movement inhibiting member is a locking pin; and
   wherein a movement of the moving part is limited by engaging the engaging recess of the moving part and the locking pin together.
<4> The hydrogen tank connection method according to the above <1>, wherein, when the hydrogen tank is inserted in the hydrogen consuming apparatus and disposed at a hydrogen supply stopping position, the hydrogen tank is moved to and disposed at a hydrogen supply waiting position where, in the approaching step, the first and second connection parts are disposed to face each other in the separated state.
<5> The hydrogen tank connection method according to the above <1>, wherein, when there is a gravity component in an approach direction of the first connection part to the second connection part, an output of an actuator of the moving part is adjusted in accordance with a size of the gravity component.
<6> A hydrogen consumption system comprising a removable hydrogen tank, a hydrogen consuming apparatus configured to consume hydrogen of the hydrogen tank, and a control apparatus,
   wherein the hydrogen tank comprises a first connection part;
   wherein the hydrogen consuming apparatus comprises a second connection part and a moving part configured to move the hydrogen tank;
   wherein the control apparatus performs connection control of the hydrogen tank to the hydrogen consuming apparatus;
   wherein the connection control comprises an approaching step of disposing the first and second connection parts to face each other in a separated state and a connecting step of connecting the separated first and second connection parts by reducing a distance therebetween after the approaching step; and
   wherein the control apparatus moves the hydrogen tank in an axial direction of the first and second connection parts by the moving part.
<7> The hydrogen consumption system according to the above <6>,
   wherein the hydrogen consuming apparatus comprises a movement inhibiting member configured to lock the moving part at a predetermined position when limiting the movement of the hydrogen tank, and
   wherein, in the approaching step, the control apparatus performs lock control to put the hydrogen tank into a locked state by the movement inhibiting member and dispose the first and second connection parts to face each other in a separated state by the locking by the movement inhibiting member.
<8> The hydrogen consumption system according to the above <7>,
   wherein the moving part comprises an engaging recess that is engageable with the movement inhibiting member;
   wherein the movement inhibiting member is a locking pin; and
   wherein the control apparatus limits a movement of the moving part by engaging the engaging recess of the moving part and the locking pin together.
<9> The hydrogen consumption system according to the above <6>, wherein, when the hydrogen tank is inserted in the hydrogen consuming apparatus and disposed at a hydrogen supply stopping position, as the approaching step of the connection control, the control apparatus moves the hydrogen tank from the hydrogen supply stopping position to a hydrogen supply waiting position to dispose the first and second connection parts to face each other in a separated state.
<10> The hydrogen consumption system according to the above <6>, wherein, when there is a gravity component in an approach direction of the first connection part to the second connection part, the control apparatus adjusts an output of an actuator of the moving part in accordance with a size of the gravity component.
<11> The hydrogen consumption system according to the above <8>,
   wherein the moving part comprises, as the engaging recess, a first engaging recess and a second engaging recess in order from closest to the second connection part at a predetermined interval,
   wherein a width of the first engaging recess and that of the second engaging recess are larger than a width of the locking pin;
   wherein, when the hydrogen tank is inserted in the hydrogen consuming apparatus and the moving part is disposed at the hydrogen supply stopping position, the control apparatus performs an origin point learning step by engaging the locking pin with the first engaging recess; and
   wherein, when the moving part is moved to the hydrogen supply waiting position, the control apparatus performs a position correction step by engaging the locking pin with the second engaging recess.
<12> The hydrogen consumption system according to the above <11>,
   wherein the first connection part is an on-off valve, and
   wherein the second connection part is a pushrod.

### Advantageous Effects of Invention

According to the present disclosure, a connection failure between the connector of the hydrogen tank and that of the hydrogen consuming apparatus is suppressed; moreover, a hydrogen supply failure and a hydrogen blocking failure are suppressed, both which are due to the connection failure.

### Brief Description of Drawings

[FIG. 1] FIG. 1 is a view of an example of the structure of the hydrogen consumption system.
[FIG. 2] FIG. 2 is an external view of an example of the structure of the hydrogen tank.
[FIG. 3] FIG. 3 is a cross-sectional view of an example of the structure of the hydrogen tank along the direction of the axis O.
[FIG. 4] FIG. 4 is a view for illustrating the on-off valve and the second connection part.
[FIG. 5] FIG. 5 is a cross-sectional view of an example of an attachment part.
[FIG. 6] FIG. 6 is a schematic view of an example of the attachment part.
[FIG. 7] FIG. 7 is a view for illustrating the control apparatus.
[FIG. 8] FIG. 8 is a view for illustrating the connection state of the hydrogen tank.
[FIG. 9] FIG. 9 is a flowchart for illustrating the flow of the connection control S10 of the hydrogen tank from the horizontal direction.
[FIG. 10] FIG. 10 is a view for illustrating the connection control S10 of the hydrogen tank.
[FIG. 11] FIG. 11 is a view for illustrating the connection control S10 of the hydrogen tank.
[FIG. 12] FIG. 12 is a flowchart for illustrating the flow of the connection control S20 of the hydrogen tank from the upper side of the vertical direction.
[FIG. 13] FIG. 13 is a view for illustrating the connection control S20 of the hydrogen tank.
[FIG. 14] FIG. 14 is a view for illustrating the connection control S20 of the hydrogen tank.
[FIG. 15] FIG. 15 is a flowchart for illustrating the flow of the connection control S30 of the hydrogen tank from the obliquely upward direction.
[FIG. 16] FIG. 16 is a view for illustrating the connection control S30 of the hydrogen tank.
[FIG. 17] FIG. 17 is a view for illustrating the connection control S30 of the hydrogen tank.

### Description of Embodiments

### 1. Hydrogen tank connection method

According to the present disclosure, provided is a hydrogen tank connection method for connecting a first connection part of a removable hydrogen tank to a second connection part of a hydrogen consuming apparatus configured to consume hydrogen of the hydrogen tank,
the method comprising an approaching step of disposing the first and second connection parts to face each other in a separated state and a connecting step of connecting the separated first and second connection parts by reducing a distance therebetween after the approaching step,
wherein, in the approaching step and the connecting step, the hydrogen tank is moved in an axial direction of the first and second connection parts by a moving part configured to move the hydrogen tank.

The hydrogen tank connection method of the present disclosure includes the approaching step and the connecting step. The first connection part of the hydrogen tank is connected to the second connection part of the hydrogen consuming apparatus through these steps.

### (Approaching step)

The approaching step is a step of disposing the first and second connection parts to face each other in the separated state.

The distance between the separated first and second connection parts is not particularly limited, as long as the first and second connection parts are not in contact with each other.

In the approaching step, the first and second connection parts are only required to be disposed to face each other. From the viewpoint of reducing the occurrence of the connection failure, they may be disposed on the same axis. In the present disclosure, the same axis means that the first and second connection parts are disposed in a straight line in a connectable direction. It is a position where the first and second connection parts can be connected to each other when the distance therebetween is reduced, as long as they face each other.

When the hydrogen tank is inserted in the hydrogen consuming apparatus and disposed at the hydrogen supply stopping position, the hydrogen tank may be moved to and disposed at the hydrogen supply waiting position where, in the approaching step, the first and second connection parts are disposed to face each other in the separated state.

In the approaching step, the hydrogen tank may be moved from the hydrogen supply stopping position to the hydrogen supply waiting position. By the approaching step, the hydrogen tank can be disposed at the position of waiting for the supply of hydrogen to the hydrogen consuming apparatus.

In the hydrogen consuming apparatus, insertion of the hydrogen tank, attachment of the hydrogen tank, detachment of the hydrogen tank and so on are performed.

The insertion of the hydrogen tank means an operation to dispose the hydrogen tank at the position where to start attachment of the hydrogen tank (the hydrogen supply stopping position). More specifically, it may be an operation to insert the hydrogen tank in the housing hole of the attachment part of the hydrogen consuming apparatus by hand or the like from the outside of the hydrogen consumption system.

Attachment of the hydrogen tank or attaching the hydrogen tank means an operation to connect the hydrogen tank and the hydrogen consuming apparatus so that they are in the state where the hydrogen tank can supply hydrogen to the hydrogen consuming apparatus. More specifically, it means the following operation: first, the hydrogen tank is moved by hand or the actuator from the hydrogen supply stopping position to the position where to start accurate position adjustment for connecting the first connection part of the hydrogen tank and the second connection part of the hydrogen consuming apparatus (the hydrogen supply waiting position), and the hydrogen tank is further moved by hand or the actuator from the hydrogen supply waiting position to the position where to connect the first connection part of the hydrogen tank and the second connection part of the hydrogen consuming apparatus (a hydrogen supply starting position), thereby connecting the pair of the connection parts.

Detachment of or detaching the hydrogen tank means the following operations: an operation to move the hydrogen tank from the hydrogen supply starting position to the hydrogen supply waiting position by hand or the actuator by releasing the connection of the first connection part of the hydrogen tank and the second connection part of the hydrogen consuming apparatus by hand or the actuator, and an operation to move the hydrogen tank from the hydrogen supply waiting position to the hydrogen supply stopping position by hand or the actuator to make the hydrogen tank removable to the outside of the hydrogen consumption system.

The hydrogen supply stopping position is a position where attaching the hydrogen tank to the hydrogen consuming apparatus begins, and it is also a position where the hydrogen tank is removable to the outside of the hydrogen consumption system. More specifically, it is a position where the hydrogen tank is inserted in the housing hole of the attachment part of the hydrogen consuming apparatus by hand or the like from the outside of the hydrogen consumption system. The hydrogen supply stopping position may be a position that is more distant from the second connection part of the hydrogen consuming apparatus than the hydrogen supply waiting position, in the moving direction of the moving part.

The hydrogen supply waiting position is only required to be a position of waiting for the supply of hydrogen to the hydrogen consuming apparatus since, at that position, the hydrogen tank is not connected to the hydrogen consuming apparatus in the state that the hydrogen tank can supply hydrogen to the hydrogen consuming apparatus. Also, it may be a position that is closer to the second connection part of the hydrogen consuming apparatus than the hydrogen supply stopping position in the moving direction of the moving part and a position that is the first connection part of the hydrogen tank and the second connection part of the hydrogen consuming apparatus are not connected to each other. For example, the hydrogen supply waiting position may be the position where to start accurate position adjustment for connecting the first connection part of the hydrogen tank and the second connection part of the hydrogen consuming apparatus. The position where to start the accurate position adjustment may be a position where the first and second connection parts are disposed to face each other in the separated state, or it may be a position where the first and second connection parts are disposed to face each other in the separated state on the same axis.

The hydrogen supply starting position is only required to be a position where the hydrogen tank and the hydrogen consuming apparatus are connected such that they are in the state where the hydrogen tank can supply hydrogen to the hydrogen consuming apparatus. More specifically, it may be a position where the first connection part of the hydrogen tank and the second connection part of the hydrogen consuming apparatus are connected to each other.

### (Connecting step)

The connecting step is a step of connecting the separated first and second connection parts by reducing the distance therebetween after the approaching step.

In the connecting step, the hydrogen tank may be moved from the hydrogen supply waiting position to the hydrogen supply starting position. By the connecting step, the hydrogen tank and the hydrogen consuming apparatus can be connected such that they are in the state where the hydrogen tank can supply hydrogen to the hydrogen consuming apparatus.

In the approaching step and the connecting step, the hydrogen tank is moved in the axial direction of the first and second connection parts by the moving part configured to move the hydrogen tank. In the present disclosure, the axial direction of the first and second connection parts means the direction the first connection part and the second connection part can be connected to each other.

The method for moving the moving part is not particularly limited. For example, the moving part may be manually inserted in and withdrawn from the hydrogen consuming apparatus by use of a member such as a lever, or the movement of the moving part may be controlled by the actuator.

When the actuator is used and when there is the gravity component in the approach direction of the first connection part to the second connection part, the output of the actuator may be adjusted in accordance with the size of the gravity component.

When the first connection part is positioned more obliquely upward than the second connection part or more upward in the vertical direction, in the connecting step, the output of the actuator may be decreased in accordance with the size of the gravity component. On the other hand, when the first connection part is positioned more obliquely downward than the second connection part or more downward in the vertical direction, in the connecting step, the output of the actuator may be increased in accordance with the size of the gravity component. When the first connection part and the second connection part are horizontally positioned, there is no need to adjust the output of the actuator.

The presence/absence and size of the gravity component may be detected by use of an acceleration sensor, an angle sensor or the like, for example.

The angle sensor detects the angle θ between the installation surface of the second connection part and the straight line in the approach direction of the first connection part to the second connection part. The angle θ corresponds to the insertion angle of the hydrogen tank in the hydrogen consuming apparatus.

In the case of using the angle sensor, the presence/absence and size of the gravity component may be detected by, for example, preparing the first map in advance, which indicates the correlation between the gravity component and the insertion angle of the hydrogen tank in the hydrogen consuming apparatus, and comparing the angle θ detected by the angle sensor with the first map.

The output to be adjusted of the actuator may be calculated by the following method, for example.

The output to be adjusted of the actuator may be calculated by preparing a correlation formula between the gravity component and the output of the actuator and using the correlation formula.

The output to be adjusted of the actuator may be calculated by preparing the second map in advance, which indicates the correlation between the gravity component and the output of the actuator, and comparing the detected gravity component size with the second map.

The output of the actuator may be adjusted in light of the mass of the hydrogen tank. The adjusted output of the actuator may be calculated by, for example, preparing the third map in advance, which indicates the correlation between the gravity component, the mass of the hydrogen tank and the output of the actuator, and comparing the mass of the hydrogen tank and the detected gravity component size with the third map.

In the case of using the angle sensor, the output of the actuator may be switched as follows, for example. First, the outputs of the actuators corresponding to predetermined angular ranges are set in advance, such as the outputs in the cases where the insertion angle of the hydrogen tank in the hydrogen consuming apparatus is 0°, 0° < θ ≤ 15°, 15° < θ ≤ 30°, 30° < θ ≤ 45°, 45° < θ ≤ 60°, 60° < θ ≤ 75°, 75° < θ < 90°, 90° and so on. Next, the output of the actuator is switched in accordance with the predetermined angular range to which the angle θ detected by the angle sensor corresponds.

Also, for example, in the case of a hydrogen consuming apparatus which is designed such that the insertion angle of the hydrogen tank in the hydrogen consuming apparatus is 30° for structural reasons, the output of the actuator may be set in advance to an output reflecting the gravity component at an angle θ of 30°.

In the approaching step and the connecting step, the movement of the hydrogen tank may be limited by the movement inhibiting member configured to lock the moving part at the predetermined position.

In the approaching step and the connecting step, the movement of the moving part may be limited by engaging the engaging recess of the moving part and the locking pin together.

### 2. Hydrogen consumption system

According to the present disclosure, provided is a hydrogen consumption system comprising a removable hydrogen tank, a hydrogen consuming apparatus configured to consume hydrogen of the hydrogen tank, and a control apparatus,
wherein the hydrogen tank comprises a first connection part;
wherein the hydrogen consuming apparatus comprises a second connection part and a moving part configured to move the hydrogen tank;
wherein the control apparatus performs connection control of the hydrogen tank to the hydrogen consuming apparatus;
wherein the connection control comprises an approaching step of disposing the first and second connection parts to face each other in a separated state and a connecting step of connecting the separated first and second connection parts by reducing a distance therebetween after the approaching step; and
wherein the control apparatus moves the hydrogen tank in an axial direction of the first and second connection parts by the moving part.

The hydrogen consumption system of the present disclosure includes the removable hydrogen tank, the hydrogen consuming apparatus configured to consume the hydrogen of the hydrogen tank, and the control apparatus.

The hydrogen consumption system of the present disclosure may be used in mobile objects such as a vehicle, a railroad, a ship and an aircraft, and in stationary power generation systems such as a fuel cell generator. As the vehicle, examples include, but are not limited to, a fuel cell electric vehicle and a hydrogen engine vehicle.

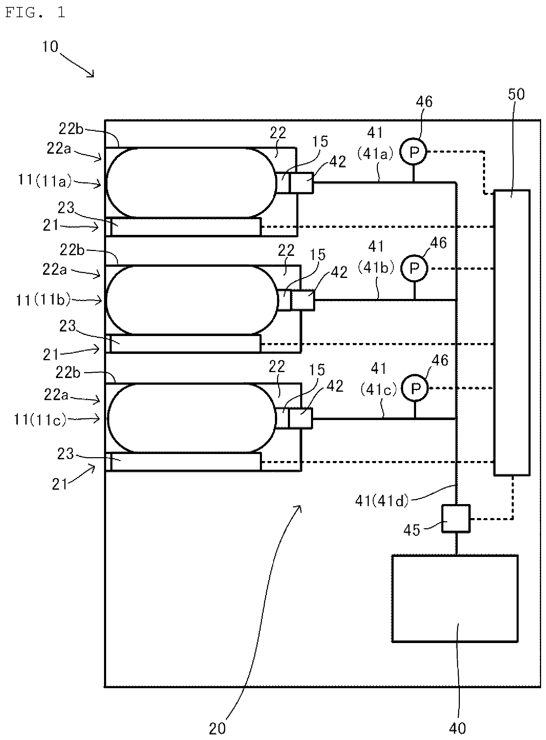

FIG. 1 is a view of an example of the structure of the hydrogen consumption system. The hydrogen consumption system 10 shown in FIG. 1 includes a hydrogen tank 11, which is a hydrogen supply source, a hydrogen consuming apparatus 20, which is a hydrogen supply destination, and a control apparatus 50. The hydrogen consumption system 10 shown in FIG. 1 is a power generation system configured to generate power by supplying the hydrogen stored in the hydrogen tank 11 to a fuel cell 40 included in the hydrogen consuming apparatus 20. Also in FIG. 1, the hydrogen tank 11 is configured to be removable from the hydrogen consuming apparatus 20.

In FIG. 1, a plurality (three) of the hydrogen tanks 11 are provided, and the hydrogen tanks 11 are each filled with hydrogen. In FIG. 1, the three hydrogen tanks 11 are allotted with reference numbers 11a, 11b and 11c for differentiation. The hydrogen tanks 11 may be tanks having the same capacity, or at least one tank having a different capacity may be included in them.

The hydrogen tank is described below in detail.

### [Hydrogen tank]

The hydrogen tank (may be simply referred to as "tank") is a container for storing a supplied fuel (hydrogen in this embodiment) in a liquid or gaseous state. Hydrogen is supplied from the hydrogen tank to the hydrogen consuming apparatus. The hydrogen consumption system is only required to include at least one hydrogen tank, or it may include several (n) hydrogen tanks. The n is only required to be an integer of 2 or more, and the upper limit thereof is not particularly limited.

The hydrogen tank is only required to have a removable structure. As the hydrogen tank, a known object that is usable as the hydrogen tanks can be used.

The allowable pressure of the hydrogen tank is not particularly limited. From the viewpoint of supplying much more hydrogen while reducing the tank size or ease of handling, the hydrogen tank may be a tank that can store hydrogen at an allowable pressure of more than 20 MPa and 70 MPa or less.

The hydrogen tank may include an outer casing forming the outer shell of the hydrogen tank, a handle to be gripped when removing the hydrogen tank from the hydrogen consuming apparatus, and so on.

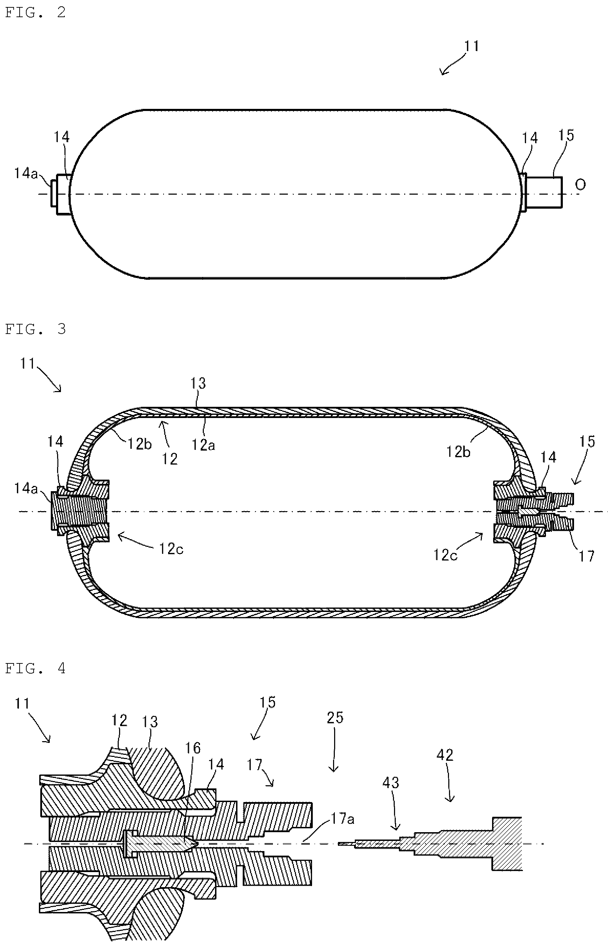

FIGS. 2 and 3 are views for illustrating the hydrogen tank. FIG. 2 is an external view of an example of the structure of the hydrogen tank. FIG. 3 is a cross-sectional view of an example of the structure of the hydrogen tank along the direction of the axis O. The hydrogen tank 11 shown in FIGS. 2 and 3 includes a liner 12, a reinforcing layer 13, nozzles 14, and an on-off valve 15 serving as the first connection part. These components are described below.

### [Liner]

The liner is a hollow member defining the internal space of the hydrogen tank. The liner 12 shown in FIG. 3 is cylindrical. In FIG. 3, the liner 12 is such that apertures at both ends of a body 12a having a generally constant diameter, are narrowed by a domal side edge part 12b, and a nozzle 14 is disposed in each of the narrowed apertures.

The liner is only required to be composed of a material that can hold a substance stored in the internal space (e.g., hydrogen) without leaking. As the material, a known material can be used. More specifically, the material may be a material made of nylon resin, a synthetic resin such as polyethylene resin, stainless steel, or a metal such as aluminum, for example. Of them, from the viewpoint of weight reduction of the hydrogen tank, the material for the liner may be a synthetic resin.

The thickness of the liner is not particularly limited. It may be from 0.5 mm to 3.0 mm.

### [Reinforcing layer]

The reinforcing layer 13 shown in FIG. 3 is made of fibers stacked in layers, and the fibers are impregnated with a cured resin. The fiber layers are composed of a fiber bundle that is wound in layers around the periphery of the liner 12 to a predetermined thickness. The thickness of the reinforcing layer 13 and the number of the times of winding the fiber bundle are not particularly limited, since they are determined by required strength. The thickness of the reinforcing layer 13 is approximately from 10 mm to 30 mm.

As the fiber bundle of the reinforcing layer 13, for example, carbon fiber is used. The fiber bundle is in a band shape such that a carbon fiber bundle has a predetermined sectional shape (e.g., a rectangular section). As the sectional shape, examples include, but are not particularly limited to, a rectangle having a width of approximately from 6 mm to 20 mm and a thickness of approximately from 0.1 mm to 0.3 mm. The amount of the carbon fibers contained in the fiber bundle is not particularly limited. For example, the fiber bundle may be composed of approximately 36,000 carbon fibers.

The cured resin penetrating the fibers (the fiber bundle) of the reinforcing layer 13 is not particularly limited, as long as it can increase the fiber strength. As the resin, for example, a thermosetting resin that is curable by heat may be used. As the thermosetting resin, examples include, but are not limited to, an amine- or anhydride-based curing accelerator, an epoxy resin containing a rubber-based toughening agent, an unsaturated polyester resin, and a resin composition which contains an epoxy resin as a base material and which is curable when mixed with a curing agent. The resin composition automatically cures by mixing the base material with the curing agent and causing the mixed resin composition to reach and penetrate the fiber layers before it cures.

As needed, a protective layer may be disposed on the periphery of the reinforcing layer 13. When the protective layer is disposed, for example, glass fiber is wound around the protective layer, and the glass fiber is impregnated with a resin. The resin may be the same as the resin of the reinforcing layer 13. Accordingly, impact resistance is imparted to the hydrogen tank 11.

The thickness of the protective layer is not particularly limited. It may be approximately from 1.0 mm to 1.5 mm.

### [Nozzles]

The nozzles 14 shown in FIGS. 2 and 3 are members that are attached to the two apertures 12c of the liner 12. The nozzles 14 are disposed at both ends of the liner 12 in the direction of the axis O, and they function as apertures connecting the inside and outside of the hydrogen tank 11. Also, the on-off valve 15 is attached to one of the nozzles (hereinafter, the nozzle will be referred to as "the first nozzle"). Accordingly, the first nozzle 14 is provided with a hole having a circular section, which is one of the two apertures 12c (hereinafter, it will be referred to as "the first hole) and used to dispose the on-off valve 15. The inner surface of the first hole is provided with an internal thread. The internal thread corresponds to the external thread of the on-off valve 15. By combining the internal thread with the external thread of the on-off valve 15, the on-off valve 15 is fixed in the first nozzle 14. Also, the inner surface of the first hole is provided with a sealing surface which is a flat surface provided on the more inner side (high pressure side) of the hydrogen tank 11 than the internal thread. A sealing member is provided on the periphery of the on-off valve 15, and the sealing member is brought into contact with the sealing surface to seal the inside of the hydrogen tank 11.

The material for the nozzles 14 is not particularly limited, as long as it has required strength. As the material, examples include, but are not limited to, stainless steel and aluminum.

### [First connection part]

The hydrogen tank includes the first connection part connected to the hydrogen consuming apparatus (i.e., the hydrogen tank-side connection part).

The first connection part may be an on-off valve or the like. As the on-off valve, examples include, but are not limited to, a solenoid valve.

The on-off valve 15 shown in FIGS. 2 and 3 is retained in the hole of the first nozzle 14 so as to connect the inside and outside of the hydrogen tank 1. The on-off valve 15 is disposed in one of the two nozzles 14 (i.e., the first nozzle) provided at both longitudinal ends of the hydrogen tank 11. A plug 14a is disposed in the other nozzle 14 (the second nozzle 14) for sealing.

FIG. 4 is a view for illustrating the on-off valve and the second connection part. FIG. 4 shows a view including the vicinity of the on-off valve 15 shown in FIG. 3 and showing the state that the on-off valve 15 and the second connection part 42 of the hydrogen consuming apparatus 20 described below are separated from each other. The on-off valve 15 includes an axis part disposed inside the hole of the first nozzle 14, and the external thread that is combined with the internal thread of the first nozzle 14 is provided on the peripheral surface of the axis part, thereby fixing the on-off valve 15 in the hole of the first nozzle 14. Also, a sealing member (not shown) is disposed on the peripheral surface of the on-off valve 15, and for sealing, the sealing member is disposed in contact with the sealing surface of the inner surface of the first nozzle 14.

The on-off valve 15 shown in FIG. 4 includes a disc 16 and an insert part 17.

The disc 16 shown in FIG. 4 is a switching valve for allowing and controlling the connection of the inside and outside of the hydrogen tank 11. When the valve is closed, the disc 16 is powered to control the connection. By pushing the disc 16 back against the power, the disc 16 is moved to allow the connection. In this embodiment, as just described, since the connection is switched by pushing and releasing the disc 16, a method for pushing the disc 16 is required. Accordingly, as will be described below, the hydrogen consuming apparatus 20 is provided with a method for pushing the disc 16 (a pushrod 43).

The on-off valve 15 shown in FIG. 4 includes the insert part 17 which houses the disc 16 and in which the pushrod 43 can be inserted. Accordingly, the insert part 17 is provided with an insert hole 17a which connects to the disc 16 and in which the pushrod 43 can be inserted.

### [Hydrogen consuming apparatus]

The hydrogen consuming apparatus is a destination of the hydrogen supplied from the hydrogen tank, and it is an apparatus configured to receive and consume the hydrogen. The hydrogen consuming apparatus 20 shown in FIG. 1 includes an attachment part 21, the fuel cell 40, a supply flow path 41, the second connection part 42, an injection 45 and a pressure sensor 46. Hereinafter, these components will be described.

### [Attachment part]

The attachment part is a part configured to house the hydrogen tank when connecting the hydrogen tank to the hydrogen consuming apparatus. The attachment part includes at least the moving part. As needed, it may include the housing hole, the movement inhibiting member, the actuator, the sensor and so on.

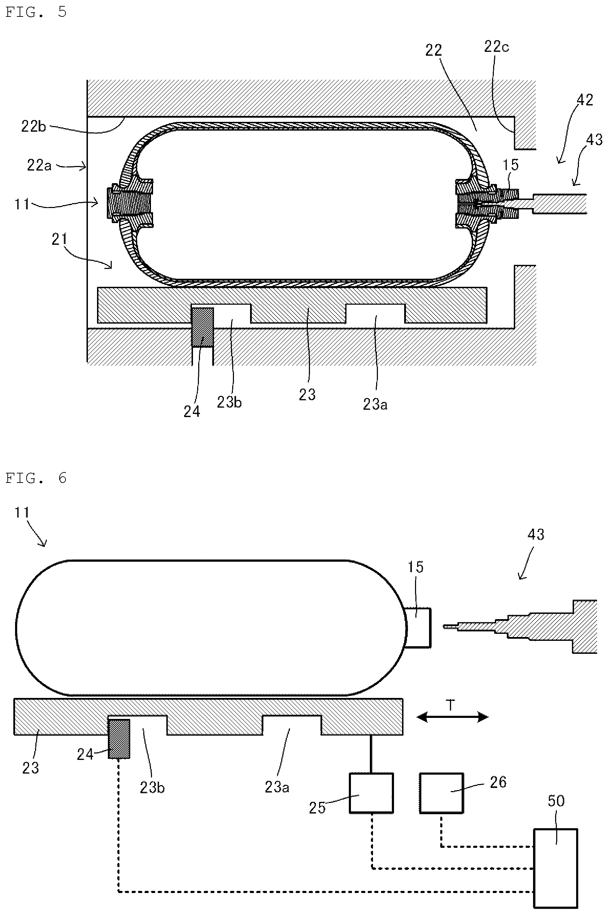

FIG. 5 is a cross-sectional view of an example of the attachment part. FIG. 6 is a schematic view of an example of the attachment part. FIG. 5 schematically shows a cross-section of the hydrogen tank 11 when the hydrogen tank 11 is attached to the attachment part 21 and the on-off valve 15 of the hydrogen tank 11 is connected to the pushrod 43 of the second connection part 42. FIG. 6 schematically shows components that are provided to the attachment part 21 and the vicinity thereof. The attachment part 21 shown in FIGS. 5 and 6 includes a housing hole 22, a base 23, a locking pin 24, a stepper motor 25 and a position sensor 26.

### [Housing hole]

The housing hole 22 shown in FIG. 5 is a space configured to house the hydrogen tank 11, and it is also a space including an aperture 22a, through which the hydrogen tank 11 is moved into and out of the housing hole, and being surrounded by an inner wall 22b. In the housing hole 22, the second connection part 42 (the pushrod 43) is disposed at a bottom part 22c which is on the opposite side of the aperture 22a.

In the present disclosure, a plurality of the housing holes 22 are stacked one above the other. The number of the stacked housing holes is not particularly limited, and it may be three.

### [Moving part]

The moving part moves the hydrogen tank. The moving part moves in the direction that the first connection part of the hydrogen tank approaches and separates from the second connection part of the hydrogen consuming apparatus. By the moving part, the hydrogen tank is moved between the hydrogen supply stopping position, the hydrogen supply waiting position and the hydrogen supply starting position.

The moving part may include the engaging recess (a positioning hole) that is engageable with the movement inhibiting member.

The moving part is only required to include at least one engaging recess. The moving part may include a plurality of the engaging recesses, and the number of the engaging recesses may be two, three or more.

In the moving direction the moving part, the moving part may include, as the engaging recess, the first engaging recess and the second engaging recess in order from closest to the second connection part at the predetermined interval.

The engaging recess may be disposed at a desired position of the moving part. In the case of disposing the hydrogen tank on the upper surface side of the moving part, the engaging recess may be disposed on the lower surface side of the moving part. The detailed embodiment of the engaging recess is not particularly limited, as long as the engaging recess is configured such that the locking pin is engageable with and releasable from the engaging recess. The engaging recess may be a recess or a groove. The engaging recess may be a recess, groove or the like formed on the moving part, or it may be a recessed accessory attached to the moving part.

The width of the engaging recess (the size in the moving direction of the moving part) may be larger than the width of the locking pin. Accordingly, the moving part can move in the width range of the engaging recess, even when the locking pin is projected to enter the inside of the engaging recess.

The moving part may be the base 23 shown in FIGS. 1, 5 and 6. The base 23 is a member on which the hydrogen tank 11 is placed and fixed. The base 23 is disposed inside the housing hole 22 and at the bottom of the housing hole. The base 23 is disposed so as to be movable in the depth direction of the housing hole 22 (i.e., the direction connecting the aperture 22a and the bottom part 22c, the direction that the on-off valve 15 of the hydrogen tank 11 approaches and separates from the second connection part 42 (the pushrod 43), and the direction of an arrow T shown in FIG. 6). The on-off valve 15 of the hydrogen tank 11 and the second connection part 42 face each other, and they are disposed on the same axis. The method for moving the moving part is not particularly limited. As the moving method, examples include, but are not limited to, a combination of a rail and a wheel.

In addition, the first engaging recess 23a and the second engaging recess 23b are formed on the lower surface (the surface facing the inner surface 22b) of the base 23 shown in FIGS. 5 and 6. The detailed embodiment of the first engaging recess 23a and the second engaging recess 23b is not particularly limited, as long as they are configured such that the locking pin 24 is engageable and releasable. Each of the first engaging recess 23a and the second engaging recess 23b may be a recess or a groove (a groove extending toward the viewer of FIG. 6 and the opposite side of the viewer).

As shown in FIGS. 5 and 6, the width of the first engaging recess 23a and that of the second engaging recess 23b (i.e., the size in the moving direction of the base 23) are larger than the width of the locking pin 24. That is, the base 23 can move in the width range of the first engaging recess 23a and the second engaging recess 23b, even when the locking pin 24 is projected to enter the inside of the first engaging recess 23a and the second engaging recess 23b.

The first engaging recess 23a is on the side closer to the pushrod 43, and the second engaging recess 23b is on the aperture 22a side. They are disposed in the moving direction of the base 23 at a predetermined interval. The interval is the size that enables attachment and detachment controls described below.

### [Movement inhibiting member]

The hydrogen consuming apparatus may include the movement inhibiting member configured to lock the moving part at the predetermined position when limiting the movement of the hydrogen tank. The movement inhibiting member forcibly stops the movement of the moving part by locking the moving part. The movement inhibiting member is disposed at a predetermined position on the moving route of the moving part.

The predetermined position may be the hydrogen supply starting position, may be the hydrogen supply waiting position, or may be both of them.

By the lock control, the movement inhibiting member locks the moving part at the predetermined position to put the hydrogen tank into the locked state in which the movement of the hydrogen tank is limited. By the unlock control, the movement inhibiting member releases the locking of the moving part to put the moving part into the unlocked state in which the movement of the hydrogen tank is allowed.

The movement inhibiting member is electrically connected to the control apparatus. Based on an input signal, the control apparatus activates the movement inhibiting member to switch between the locked state in which the movement of the hydrogen tank is limited and the unlocked state in which the movement of the hydrogen tank is allowed.

The movement inhibiting member may be movable in response to the movement of the moving part. The movement of the movement inhibiting member may be controlled by the actuator.

The movement inhibiting member may be the locking pin or the like. The locking pin may be a solenoid locking pin.

The locking pin 24 shown in FIGS. 5 and 6 is a pin that is disposed such that it can be projected from and retracted into the inner wall 22b. When projected, the pin enters the inside of the first engaging recess 23a or the second engaging recess 23b and is engageable with the first engaging recess 23a or the second engaging recess 23b. On the other hand, the locking pin 24 is disposed such that it does not engage with the first engaging recess 23a or the second engaging recess 23b when retracted.

The locking pin 24 is electrically connected to the control apparatus 50. Based on a signal from the control apparatus 50, the retraction of the pin is controlled.

### [Actuator]

The hydrogen consuming apparatus may include at least one actuator. The hydrogen consuming apparatus may include a plurality of the actuators (n actuators) corresponding to a plurality of the moving parts (n moving parts) that move a plurality of the hydrogen tanks (n hydrogen tanks).

The actuator is not particularly limited, as long as it can control the movement of the moving part. The actuator may be a motor or the like. In this case, the moving part moves the hydrogen tank by controlling the motor.

The motor may be a stepper motor or the like.

The stepper motor 25 shown in FIG. 6 is a power source configured to move the base 23 via a gear. The detailed embodiment of the stepper motor is not particularly limited, and a known stepper motor may be used.

The stepper motor 25 is electrically connected to the control apparatus 50. Based on a signal from the control apparatus 50, the rotational angle and rotational frequency of the motor are controlled, thereby controlling the movement of the base 23 with accuracy.

### [Sensor]

The hydrogen consuming apparatus may include a sensor such as a position sensor, a torque sensor, a motor temperature sensor, an acceleration sensor, an angle sensor and a pressure sensor.

The detailed embodiment of the sensor is not particularly limited, and a known sensor may be used.

The position sensor 26 shown in FIG. 6 detects the position of the hydrogen tank 11, especially the position of the on-off valve 15 (the position in the moving direction of the base 23). The position of the on-off valve 15 may be detected based on the rotational angle of the stepper motor 25 detected by the torque sensor (not shown), or the position of the on-off valve 15 may be detected based on the temperature of the stepper motor 25 detected by the motor temperature sensor (not shown).

The position sensor 26 is electrically connected to the control apparatus 50. The position sensor 26 is configured to measure the position of the hydrogen tank 11 and transmit the measured information by a signal to the control apparatus 50.

### [Hydrogen consuming device]

The hydrogen consuming apparatus may include a hydrogen consuming device.

As the hydrogen consuming device, examples include, but are not limited to, the combustion part of a fuel cell, the combustion part of a hydrogen engine, and the combustion part of a hydrogen burner.

The fuel cell 40 shown in FIG. 1 is a device configured to consume the supplied hydrogen. The fuel cell 40 generate power by receiving the hydrogen supplied from the hydrogen tank 11 and receiving air supplied from an air hole (not shown). The detailed structure of the fuel cell 40 is not particularly limited, and a known fuel cell may be used.

### [Supply flow path]

The hydrogen consuming apparatus may include the supply flow path (a hydrogen pipe).

The supply flow path is a path configured to withdraw hydrogen from the hydrogen tank to the hydrogen consuming device, and it is composed of a pipe. The supply flow paths leading out of the hydrogen tanks may join together to form one supply flow path, and the supply flow path may be connected to the hydrogen consuming device.

The supply flow path 41 shown in FIG. 1 is a path configured to withdraw hydrogen from the hydrogen tank 11 to the fuel cell 40, and it is composed of a pipe. In FIG. 1, the hydrogen tanks 11a, 11b and 11c are connected to the fuel cell 40. Also in FIG. 1, the pipes 41a, 41b and 41c leading out of the hydrogen tanks 11a, 11b and 11c join together to form a pipe 41d, and the pipe 41d is connected to the fuel cell 40.

### [Second connection part]

The hydrogen consuming apparatus includes the second connection part (the hydrogen consuming apparatus-side connection part). When a plurality of the hydrogen tanks are attached to the hydrogen consumption system, the hydrogen consuming apparatus may include a plurality of the second connection parts corresponding to the first connection parts of the hydrogen tanks.

The second connection part is a part that is connected to the first connection part of the hydrogen tank to form a distribution path (connection) to the hydrogen tank. The second connection part may be the pushrod or the like.

In the supply flow path 41, the second connection part 42 shown in FIGS. 4, 5 and 8 is disposed at the part connected to the hydrogen tank 11. The second connection part 42 is connected to the insert part 17 which is provided to the on-off valve 15 of the hydrogen tank 11 described above; moreover, the second connection part 42 operates the opening and closing of the disc 16 of the hydrogen tank 11. As is clear from FIG. 4, the second connection part 42 includes the pushrod 43.

The pushrod 43 shown in FIGS. 4 to 6 and 8 is a member configured to push the disc 16 provided to the on-off valve 15 of the hydrogen tank 11. In this embodiment, the pushrod 43 is in the form of a bar, and the disc 16 can be pushed by an end of the rod. Accordingly, the pushrod 43 is configured such that it can be inserted in the insert hole 17a formed in the insert part 17 of the on-off valve 15.

Also, the pushrod 43 is configured to form flow paths so that hydrogen flows from the inside of the hydrogen tank 11 to the supply flow path 41 when the disc 16 is pushed to open the on-off valve 15.

### [Injection]

The hydrogen consuming apparatus may include the injection.

The injection is disposed in the supply flow path between the second connection part and the hydrogen consuming device to control hydrogen supply to the hydrogen consuming device. The detailed embodiment of the injection is not particularly limited. As the injection, examples include, but are not limited to, a check valve and a flow control valve.

The injection 45 shown in FIG. 1 is disposed in the supply flow path 41 (in this embodiment, a supply flow path 41d) between the second connection part 42 and the fuel cell 40 to control hydrogen supply to the fuel cell 40.

### [Pressure sensor]

The hydrogen consuming apparatus may include the pressure sensor.

The pressure sensor measures the pressure in the hydrogen consuming apparatus.

The pressure sensor may be disposed in each supply flow path so as to correspond to the internal pressure of each hydrogen tank, or it may measure the pressure in each supply flow path (the pressure in each pipe).

The pressure sensor 46 shown in FIG. 1 is a pressure sensor which is disposed in each of the supply flow paths 41a, 41b and 41c and which is configured to measure the pressure in each of the supply flow paths 41a, 41b and 41c (the pressure in each of the pipes) so as to correspond to the internal pressure of each of the hydrogen tanks 11a, 11b and 11c.

In this embodiment, the details of the pressure sensor 46 are not particularly limited. The pressure sensor 46 is configured to transmit the obtained pressure value data to the control apparatus 50.

### [Control apparatus]

The control apparatus is an apparatus configured to perform a control to connect the first connection part of the hydrogen tank (e.g., the on-off valve) to the second connection part of the hydrogen consuming apparatus (e.g., the pushrod) and so on. The control apparatus may be an electronic control unit (ECU) or the like.

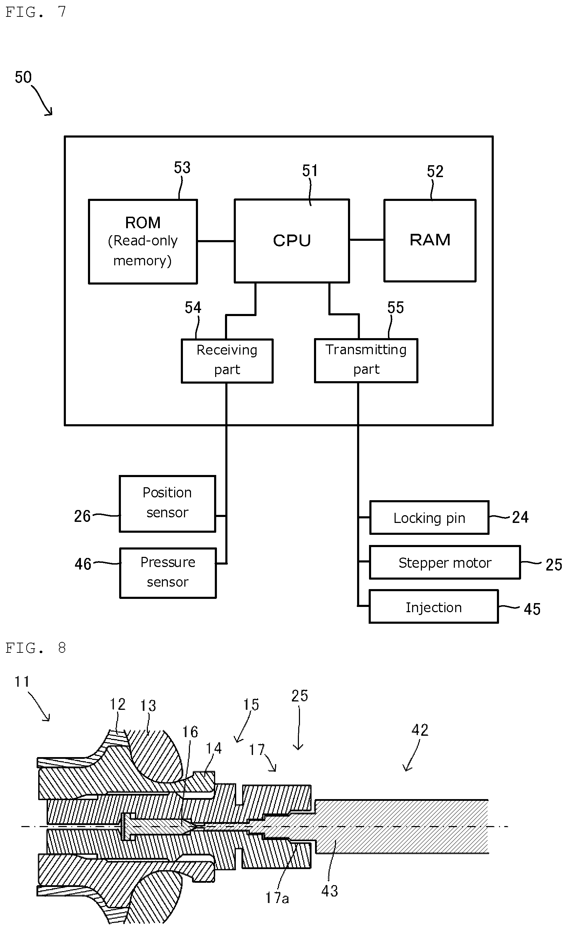

FIG. 7 is a view for illustrating the control apparatus. The control apparatus 50 is configured to communicate with the locking pin 24, the stepper motor 25, the position sensor 26, the injection 45 and the pressure sensor 46. As schematically shown in FIG. 7, the control apparatus 50 includes the following: a central processing unit (CPU) 51 which is a processor configured to perform calculations, a random access memory (RAM) 52 which is configured to function as a workspace, a read-only memory (ROM) 53 which is configured to function as a recording medium, a receiving part 54 which is an interface configured to cause the control apparatus 50 to receive the information through a wired or wireless connection, and a transmitting part 55 which is an interface configured to transmit the information from the control apparatus 50 to the outside through a wired or wireless connection.

Accordingly, the control apparatus 50 is configured as follows: the position sensor 26 and the pressure sensor 46 are connected to the receiving part 54 to receive the information, and the locking pin 24, the stepper motor 25 and the injection 45 are connected to the transmitting part 55 to transmit a signal for their actuation.

In the control apparatus 50, a program to perform arithmetic processing for the hydrogen tank connection control described below and transmit operation signals to the devices, is stored. In the control apparatus 50, the program works with CPU51, RAM52 and ROM53, which are hardware resources. More specifically, in RAM52 functioning as a workspace, CPU51 performs a computer program saved in ROM53, thereby performing a desired control. The information acquired or created by CPU51 is stored in RAM52. Also, another recording medium may be provided to the inside or outside of the control apparatus 50 to save programs or various kinds of data therein. The details of the control will be described later.

The above-described control apparatus 50 is typically composed of a computer.

### 3. Attachment and detachment controls of the hydrogen tank

Of the attachment and detachment controls of the hydrogen tank, the control apparatus performs at least the connection control (attachment control) of the hydrogen tank to the hydrogen consuming apparatus. The attachment and detachment controls include connection control and detachment control.

### 3.1. Connection control of the hydrogen tank

The connection control includes the approaching step of disposing the first and second connection parts to face each other in the separated state and the connecting step of connecting the separated first and second connection parts by reducing the distance therebetween after the approaching step.

The approaching step and the connecting step are the same as those described above under "1. Hydrogen tank connection method".

The control apparatus moves the hydrogen tank in the axial direction of the first and second connection parts by the moving part.

In the approaching step, the control apparatus may perform lock control to put the hydrogen tank into the locked state by the movement inhibiting member and to dispose the first and second connection parts to face each other in the separated state by the locking by the movement inhibiting member or to dispose them on the same axis.

The control apparatus may limit the movement of the moving part by engaging the engaging recess of the moving part and the locking pin of the hydrogen consuming apparatus together.

When the hydrogen tank is inserted in the hydrogen consuming apparatus and disposed at the hydrogen supply stopping position, as the approaching step of the connection control, the control apparatus may move the hydrogen tank from the hydrogen supply stopping position to the hydrogen supply waiting position to dispose the first and second connection parts to face each other in the separated state or to dispose the first and second connection parts on the same axis.

When there is the gravity component in the approach direction of the first connection part to the second connection part, the control apparatus may adjust the output of the actuator of the moving part configured to move the hydrogen tank, in accordance with the size of the gravity component.

The control apparatus may detect the presence/absence and size of the gravity component by use of the acceleration sensor, the angle sensor or the like, for example.

The control apparatus may detect the presence/absence and size of the gravity component by, for example, preparing the first map in advance, which indicates the correlation between the gravity component and the insertion angle of the hydrogen tank in the hydrogen consuming apparatus, and comparing the angle θ detected by the angle sensor with the first map.

The control apparatus may adjust the output of the actuator by, for example, preparing a correlation formula between the gravity component and the output of the actuator and using the correlation formula.

The control apparatus may adjust the output of the actuator by, for example, preparing the second map in advance, which indicates the correlation between the gravity component and the output of the actuator, and comparing the detected gravity component size with the second map.

The control apparatus may adjust the output of the actuator by, for example, preparing the third map in advance, which indicates the correlation between the gravity component, the mass of the hydrogen tank and the output of the actuator, and comparing the mass of the hydrogen tank and the detected gravity component size with the third map.

The control apparatus may switch the output of the actuator as follows, for example. First, the outputs of the actuators corresponding to predetermined angular ranges are set in advance, such as the outputs in the cases where the insertion angle of the hydrogen tank in the hydrogen consuming apparatus is 0°, 0° < θ ≤ 15°, 15° < θ ≤ 30°, 30° < θ ≤ 45°, 45° < θ ≤ 60°, 60° < θ ≤ 75°, 75° < θ < 90°, 90° and so on. Next, the control apparatus switches the output of the actuator in accordance with the predetermined angular range to which the angle θ detected by the angle sensor corresponds.

For example, in the case of a hydrogen consuming apparatus which, for structural reasons, is designed such that the insertion angle of the hydrogen tank in the hydrogen consuming apparatus is 30°, the control apparatus may set in advance the output of the actuator to an output reflecting the gravity component at an angle θ of 30°.

When the hydrogen tank is inserted in the hydrogen consuming apparatus and the moving part is disposed at the hydrogen supply stopping position, the control apparatus may perform the origin point learning step by engaging the locking pin with the first engaging recess.

When the moving part is moved from the hydrogen supply stopping position to the hydrogen supply waiting position, the control apparatus may perform the position correction step by engaging the locking pin with the second engaging recess.

### 3.2. Detachment control of the hydrogen tank

Of the attachment and detachment controls of the hydrogen tank, the control apparatus may perform the detachment control of the hydrogen tank to the hydrogen consuming apparatus.

The detachment control includes a connection releasing step and a separating step.

The connection releasing step is a step of moving the hydrogen tank from the hydrogen supply starting position to the hydrogen supply waiting position in the hydrogen consuming apparatus. By the connection release step, the connection between the hydrogen consuming apparatus and the hydrogen tank is released.

The separating step is a step of moving the hydrogen tank from the hydrogen supply waiting position to the hydrogen supply stopping position in the hydrogen consuming apparatus. By the separating step, the hydrogen tank can be removable from the hydrogen consuming apparatus.

Hereinafter, the hydrogen tank in the detached state and the hydrogen tank in the connected state will be described.

### 3.3. Hydrogen tank in the detached state

Before the hydrogen tank 11 is disposed in the attachment part 21 of the hydrogen consuming apparatus 20 and connected to the second connection part 42 of the hydrogen consuming apparatus 20, as shown in FIG. 4, the pushrod 43 and the on-off valve 15 are separated from each other, and in the hydrogen tank 11, the on-off valve 15 is closed by the disc 16. The position of the hydrogen tank 11 in the detached state may be the hydrogen supply waiting position or the hydrogen supply stopping position.

### 3.4. Hydrogen tank in the connected state

FIG. 8 is a view for illustrating the connection state of the hydrogen tank. When the hydrogen tank 11 is disposed in the attachment part 21 of the hydrogen consuming apparatus 20 and connected to the second connection part 42 of the hydrogen consuming apparatus 20, as shown in FIG. 8, the pushrod 43 is inserted in the inside of the insert hole 17a of the insert part 17, and the disc 16 is in a pushed state. Accordingly, hydrogen flows from the inside of the hydrogen tank 11 to the supply flow path 41 through the pushrod 43, thereby supplying the hydrogen from the fuel cell 40. The position of the hydrogen tank 11 in the connected state may be the hydrogen supply starting position.

The hydrogen supply to the fuel cell 40 is performed by actuating the injection 45, which is electrically connected to the control apparatus 50, by a command from the control apparatus 50.

### 3.5. Connection control of the hydrogen tank from the horizontal direction

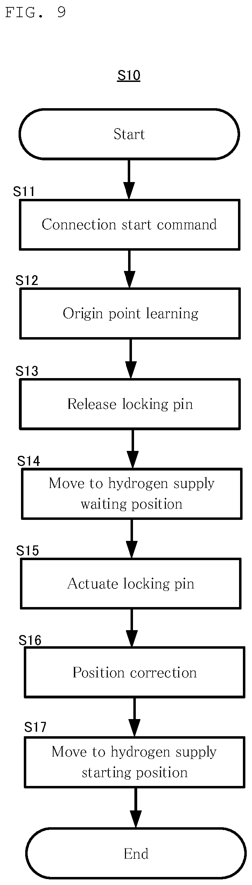

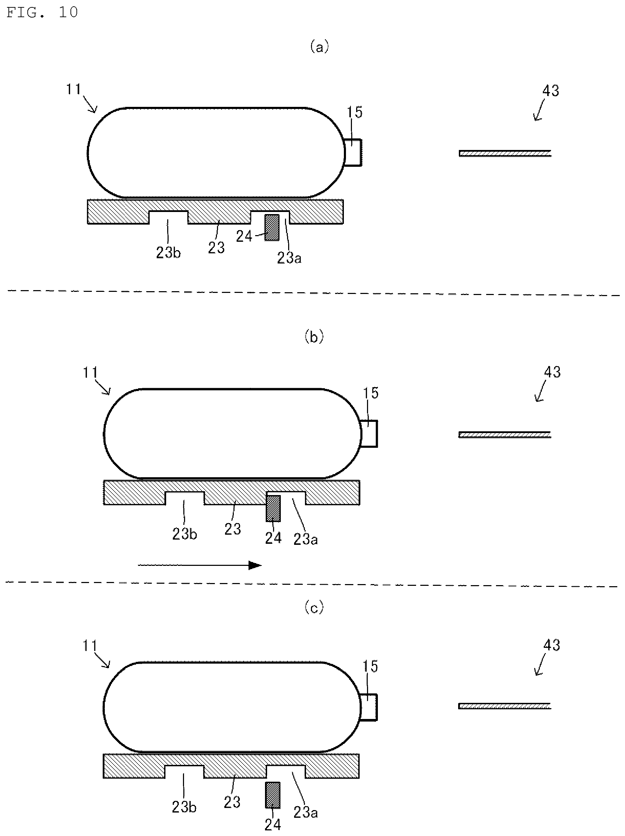

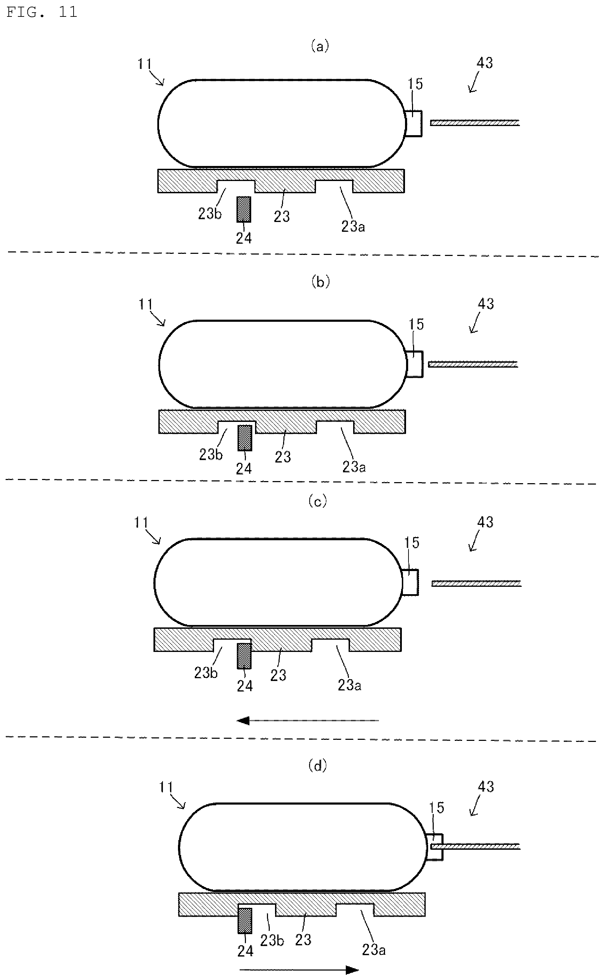

FIG. 9 is a flowchart for illustrating the flow of the connection control S10 of the hydrogen tank from the horizontal direction. Each of FIGS. 10 and 11 is a view for illustrating the connection control S10 of the hydrogen tank. Arrows shown in FIGS. 10 and 11 indicate the moving direction of the base 23 each. As is clear from FIG. 9, the hydrogen tank connection control S10 includes steps S11 to S17. Hereinafter, these steps will be described.

As shown in (a) of FIG. 10, as a precondition, the hydrogen tank 11 is placed on the base 23 that is disposed at the initial position so that the base 23 is separated from the pushrod 43. The initial position is the position of the base 23 at the time of inserting the hydrogen tank 11. The locking pin 24 is inserted in the first engaging recess 23a to restrict the movement of the base 23. In this state, the hydrogen tank 11 is disposed and fixed at the predetermined position of the base 23. The on-off valve 15 of the hydrogen tank 11 and the pushrod 43 are disposed on the same axis to face each other in a separated state. The method for fixing them is not particularly limited. For example, they may be fixed by a band disposed around them, or they may be fixed by forming a recess and a projection on the outer surface of the hydrogen tank 11, forming a projection and a recess on the surface of the base 23, which correspond to the recess and projection formed on the outer surface of the hydrogen tank 11, respectively, and combining the recess and projection on the outer surface of the hydrogen tank 11 with the projection and recess on the surface of the base 23, respectively.

### [Step S11] Connection start command

In the step S11, a command to start connection of the hydrogen tank 11 is entered into the control apparatus 50. For example, the connection start command may be such that a switching operation by a user or completion of disposing the hydrogen tank 11 on the base 23 is transmitted as a signal to the control apparatus 50.

### [Step S12] Origin point learning

In the step S12, the origin point learning is performed. More specifically, the origin point learning is performed as follows. First, as shown in (b) of FIG. 10, the control apparatus 50 operates the stepper motor 25 to move the base 23 to the position where the locking pin 24 is brought into contact with a wall that is the second engaging recess 23b side-wall of the first engaging recess 23a. Next, the control apparatus 50 determines the position as the origin point (the hydrogen supply stopping position) of the base 23.

The method for detecting the contact is not particularly limited, and it may be a known method. For example, the information that the value of the position sensor 26 corresponds to the contact position, is obtained and considered as the contact, or an increase in the torque value of the stepper motor 25 due to the contact (in this case, the control apparatus 50 is configured to receive a signal from the torque sensor (not shown) disposed in the stepper motor 25) is detected and considered as the contact.

### [Step S13] Releasing the locking by the locking pin (Lock-off control)

In the step S13, the locking by the locking pin 24 is released. More specifically, by a command from the control apparatus 50, as shown in (c) of FIG. 10, the locking pin 24 is released from the first engaging recess 23a.

### [Step S14] Moving to the hydrogen supply waiting position

In the step S14, the base 23 is moved from the hydrogen supply stopping position to the hydrogen supply waiting position. The hydrogen supply waiting position is a position where, while the on-off valve 15 of the hydrogen tank 11 is not connected to the pushrod 43 yet, the on-off valve 15 is disposed in the vicinity of the pushrod 43. In the step S14, the control apparatus 50 actuates the stepper motor 25 to move the base 23 closer to the pushrod 43. By this movement, as shown in (a) of FIG. 11, the locking pin 24 is put in the position where it can be inserted in the second engaging recess 23b.

### [Step S15] Locking the base 23 by the locking pin (Lock-on control)

In the step S15, the locking pin 24 is inserted in the second engaging recess 23b to lock the base 23. More specifically, by a command from the control apparatus 50, as shown in (b) of FIG. 11, the locking pin 24 is projected toward the second engaging recess 23b to be disposed inside the second engaging recess 23b.

### [Step S16] Position correction

In the step S16, position correction is performed. More specifically, as shown in (c) FIG. 11, the control apparatus 50 operates the stepper motor 25 to move the base 23 to the position where the locking pin 24 is brought into contact with the first engaging recess 23a-side wall of the second engaging recess 23b. Accordingly, the hydrogen supply waiting position is corrected.

The method for detecting the contact is not particularly limited, and it may be a known method. For example, the information that the value of the position sensor 26 corresponds to the contact position, is obtained and considered as the contact, or an increase in the torque value of the stepper motor 25 due to the contact (in this case, the control apparatus 50 is configured to receive a signal from the torque sensor (not shown) disposed in the stepper motor 25) is detected and considered as the contact.

### [Step S17] Moving to the hydrogen supply starting position

In the step S17, the base 23 is moved from the hydrogen supply waiting position to the hydrogen supply starting position, and the on-off valve 15 is connected to the pushrod 43 to connect the hydrogen tank 11 and the supply flow path 41 with each other. More specifically, as shown in (d) of FIG. 11, the control apparatus 50 operates the stepper motor 25 to move the base 23 closer to the pushrod 43. Accordingly, the pushrod 43 is inserted in the insert hole 17a of the on-off valve 15 to push the disc 16.

In the step S17, since the locking pin 24 is in the state of being inserted in the inside of the second engaging recess 23b, the amount of the movement of the base 23 is limited, thereby preventing the base 23 from excessive movement.

To detach the hydrogen tank 11 from the hydrogen consuming apparatus 20, the steps S11 to S17 are performed in reverse order.

### [Effects and so on]

According to the hydrogen consumption system 10 described above, a hydrogen supply failure and a hydrogen blocking failure, both of which are due to poor contact between the on-off valve 15 of the hydrogen tank 11 and the second connection part 42 (the pushrod 43) of the hydrogen consuming apparatus 20, are prevented from being caused when attaching and detaching the hydrogen tank 11.

More specifically, instead of disposing, as shown in (a) of FIG. 10, the hydrogen tank 11 on the base 23 and then connecting the hydrogen tank 11 directly to the pushrod, a control to provide the hydrogen supply waiting position is performed like the steps S14 to S16, thereby positioning the hydrogen tank 11 in two stages. Accordingly, the positioning accuracy is increased, and the above-mentioned effects are exerted. In addition, by limiting the movement of the base 23 using the locking pin 24, an increase in the accuracy of the position of the origin point and the accuracy of the position correction is obtained in the positioning, and a reduction in positioning control performance which is due to age deterioration or variations between the components, is suppressed.

### 3.6. Connection control of the hydrogen tank from the upper side of the vertical direction

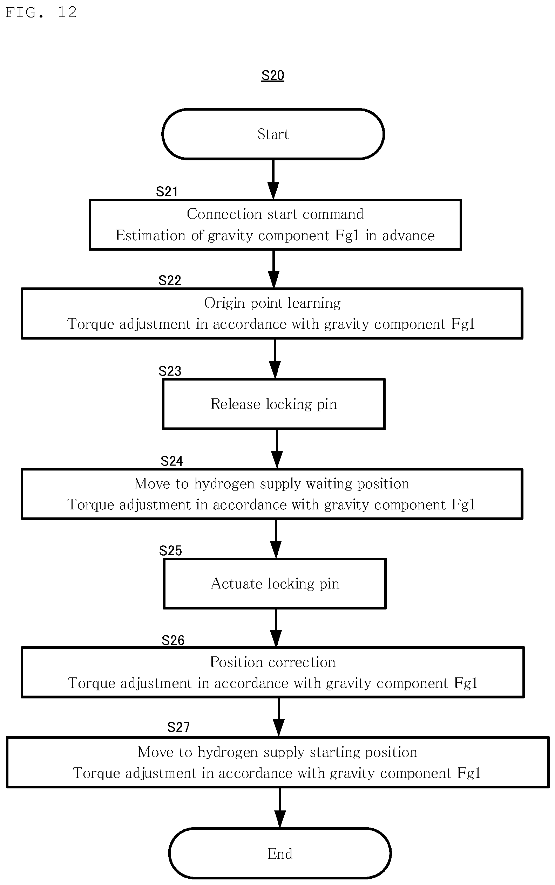

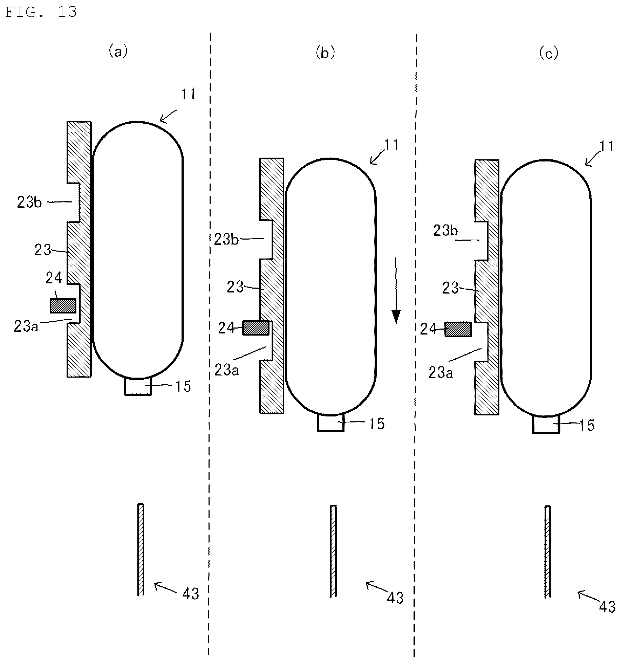

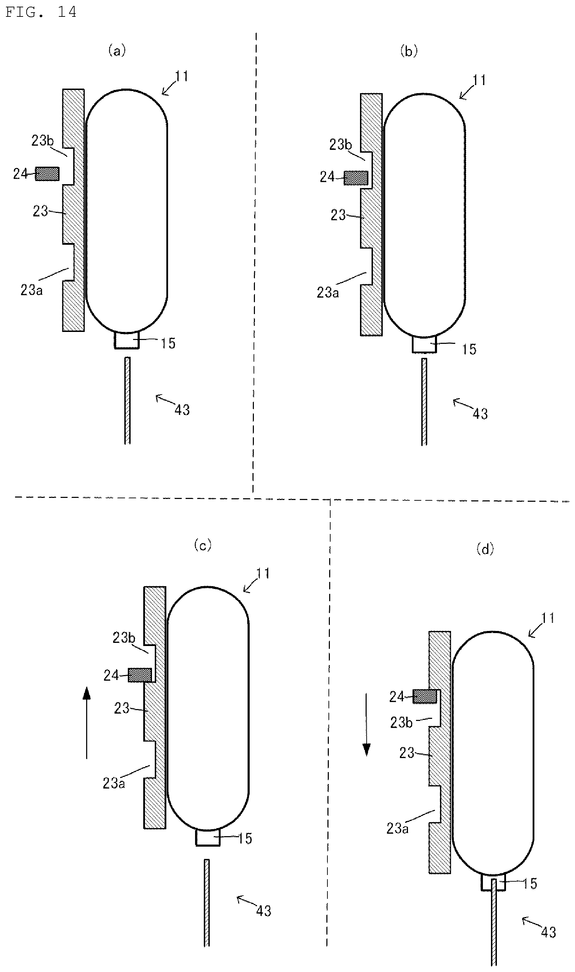

FIG. 12 is a flowchart for illustrating the flow of the connection control S20 of the hydrogen tank from the upper side of the vertical direction. Each of FIGS. 13 and 14 is a view for illustrating the connection control S20 of the hydrogen tank. Arrows shown in FIGS. 13 and 14 indicate the moving direction of the base 23 each. As is clear from FIG. 12, the hydrogen tank connection control S20 includes steps S21 to S27.

As shown in (a) of FIG. 13, as a precondition, the hydrogen tank 11 is placed on the base 23 that is disposed at the initial position so that the base 23 is separated from the pushrod 43. The initial position is the position of the base 23 at the time of inserting the hydrogen tank 11. The locking pin 24 is inserted in the first engaging recess 23a to restrict the movement of the base 23. In this state, the hydrogen tank 11 is disposed and fixed at the predetermined position of the base 23. The on-off valve 15 of the hydrogen tank 11 and the pushrod 43 are disposed on the same axis to face each other in a separated state.

Hereinafter, these steps will be described.

### [Step S21] Connection start command

In the step S21, a command to start connection of the hydrogen tank 11 is entered into the control apparatus 50.

From the torque value of the stepper motor 25, the control apparatus 50 estimates in advance the gravity component Fg1 which is applied in the connection direction of the hydrogen tank 11.

### [Step S22] Origin point learning

In the step S22, the origin point learning is performed. More specifically, the origin point learning is performed as follows. First, as shown in (b) of FIG. 13, while the locking pin 24 is in the state of being inserted in the first engaging recess 23a, the control apparatus 50 adjusts the torque value of the stepper motor 25 to zero; moreover, by the self-weight of the hydrogen tank 11, the base 23 is moved (lowered) to the position where the locking pin 24 is brought into contact with a wall that is the second engaging recess 23b-side wall of the first engaging recess 23a. Next, the control apparatus 50 determines the position as the origin point (the hydrogen supply stopping position) of the base 23.

### [Step S23] Releasing the locking by the locking pin (Lock-off control)

In the step S23, the locking by the locking pin 24 is released. More specifically, by a command from the control apparatus 50, as shown in (c) of FIG. 13, the locking pin 24 is released from the first engaging recess 23a.

### [Step S24] Moving to the hydrogen supply waiting position

In the step S24, the base 23 is moved from the hydrogen supply stopping position to the hydrogen supply waiting position. In the step S24, the control apparatus 50 actuates the stepper motor 25 to move (lower) the base 23 closer to the pushrod 43. At this time, the control apparatus 50 adjusts a torque command value to be decreased by the amount of the gravity component Fg1 estimated in advance, and the control apparatus 50 transmits the adjusted torque command value to the stepper motor 25. By this movement, as shown in (a) of FIG. 14, the locking pin 24 is put in the position where it can be inserted in the second engaging recess 23b.

### [Step S25] Locking the base 23 by the locking pin (Lock-on control)

In the step S25, the locking pin 24 is inserted in the second engaging recess 23b to lock the base 23. More specifically, by a command from the control apparatus 50, as shown in (b) of FIG. 14, the locking pin 24 is projected toward the second engaging recess 23b to be disposed inside the second engaging recess 23b.

### [Step S26] Position correction

In the step S26, position correction is performed. More specifically, as shown in (c) FIG. 14, the control apparatus 50 operates the stepper motor 25 to move (raise) the base 23 to the position where the locking pin 24 is brought into contact with the first engaging recess 23a-side wall of the second engaging recess 23b. At this time, the control apparatus 50 adjusts a torque command value to be decreased by the amount of the gravity component Fg1 estimated in advance, and the control apparatus 50 transmits the adjusted torque command value to the stepper motor 25. Accordingly, the hydrogen supply waiting position is corrected.

### [Step S27] Moving to the hydrogen supply starting position

In the step S27, the base 23 is moved from the hydrogen supply waiting position to the hydrogen supply starting position, and the on-off valve 15 is connected to the pushrod 43 to connect the hydrogen tank 11 and the supply flow path 41 with each other. More specifically, as shown in (d) of FIG. 14, the control apparatus 50 operates the stepper motor 25 to move (lower) the base 23 closer to the pushrod 43. Accordingly, the pushrod 43 is inserted in the insert hole 17a of the on-off valve 15 to push the disc 16. At this time, the control apparatus 50 adjusts the torque command value to be decreased by the amount of the gravity component Fg1 estimated in advance, and the control apparatus 50 transmits the adjusted torque command value to the stepper motor 25.

To detach the hydrogen tank 11 from the hydrogen consuming apparatus 20, the steps S21 to S27 are performed in reverse order.

### 3.7. Connection control of the hydrogen tank from the obliquely upward direction

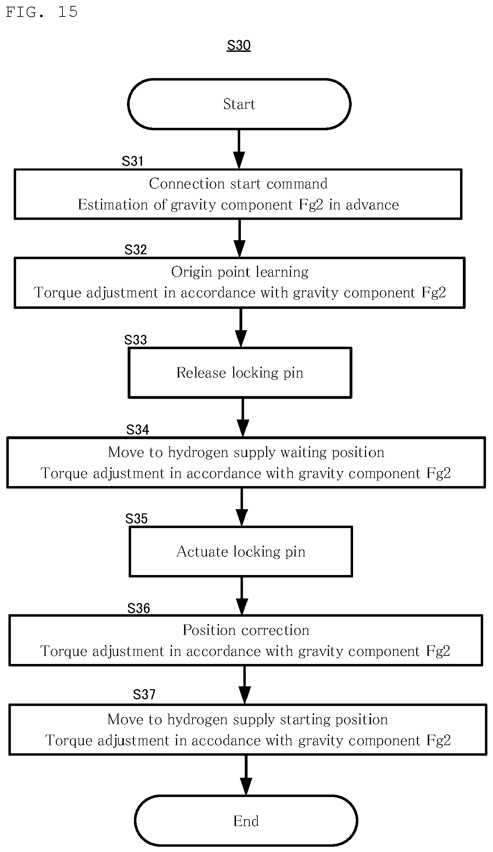

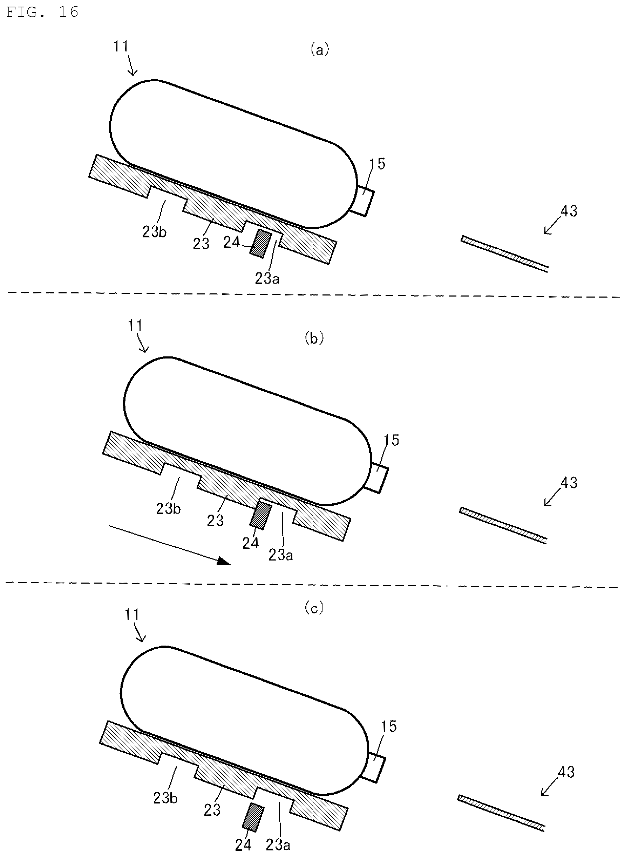

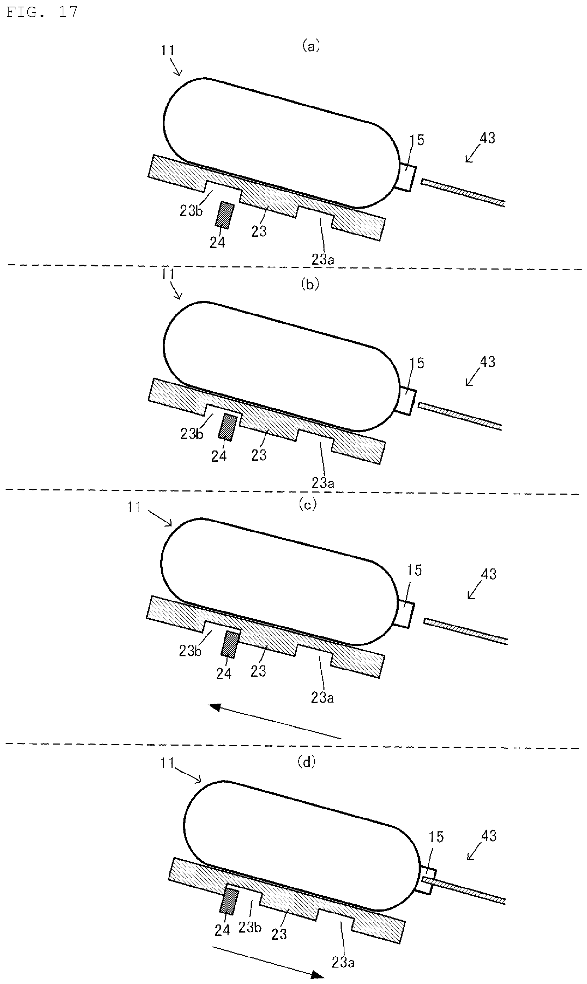

FIG. 15 is a flowchart for illustrating the flow of the connection control S30 of the hydrogen tank from the obliquely upward direction. Each of FIGS. 16 and 17 is a view for illustrating the connection control S30 of the hydrogen tank. Arrows shown in FIGS. 16 and 17 indicate the moving direction of the base 23 each. As is clear from FIG. 15, the hydrogen tank connection control S30 includes steps S31 to S37. Hereinafter, these steps will be described.

As shown in (a) of FIG. 16, as a precondition, the hydrogen tank 11 is placed on the base 23 that is disposed at the initial position so that the base 23 is separated from the pushrod 43. The initial position is the position of the base 23 at the time of inserting the hydrogen tank 11. The locking pin 24 is inserted in the first engaging recess 23a to restrict the movement of the base 23. In this state, the hydrogen tank 11 is disposed and fixed at the predetermined position of the base 23. The on-off valve 15 of the hydrogen tank 11 and the pushrod 43 are disposed on the same axis to face each other in a separated state.

Hereinafter, these steps will be described.

### [Step S31] Connection start command

In the step S31, a command to start connection of the hydrogen tank 11 is entered into the control apparatus 50.

From the torque value of the stepper motor 25, the control apparatus 50 estimates in advance the gravity component Fg2 which is applied in the connection direction of the hydrogen tank 11. The amount of the gravity component Fg2 which is applied at the timer of the connection control of the hydrogen tank from the obliquely upward direction, is smaller than the amount of the gravity component Fg1 which is applied at the time of the connection control of the hydrogen tank from the vertical direction.

### [Step S32] Origin point learning

In the step S32, the origin point learning is performed. More specifically, the origin point learning is performed as follows. First, as shown in (b) of FIG. 16, while the locking pin 24 is in the state of being inserted in the first engaging recess 23a, the control apparatus 50 adjusts the torque value of the stepper motor 25 to zero; moreover, by the self-weight of the hydrogen tank 11, the base 23 is moved (lowered) to the position where the locking pin 24 is brought into contact with a wall that is the second engaging recess 23b-side wall of the first engaging recess 23a. Next, the control apparatus 50 determines the position as the origin point (the hydrogen supply stopping position) of the base 23.

### [Step S33] Releasing the locking by the locking pin (Lock-off control)

In the step S33, the locking by the locking pin 24 is released. More specifically, by a command from the control apparatus 50, as shown in (c) of FIG. 16, the locking pin 24 is released from the first engaging recess 23a.

### [Step S34] Moving to the hydrogen supply waiting position

In the step S34, the base 23 is moved from the hydrogen supply stopping position to the hydrogen supply waiting position. In the step S34, the control apparatus 50 actuates the stepper motor 25 to move (lower) the base 23 closer to the pushrod 43. At this time, the control apparatus 50 adjusts a torque command value to be decreased by the amount of the gravity component Fg2 estimated in advance, and the control apparatus 50 transmits the adjusted torque command value to the stepper motor 25. By this movement, as shown in (a) of FIG. 17, the locking pin 24 is put in the position where it can be inserted in the second engaging recess 23b.

### [Step S35] Locking the base 23 by the locking pin (Lock-on control)

In the step S35, the locking pin 24 is inserted in the second engaging recess 23b to lock the base 23. More specifically, by a command from the control apparatus 50, as shown in (b) of FIG. 17, the locking pin 24 is projected toward the second engaging recess 23b to be disposed inside the second engaging recess 23b.

### [Step S36] Position correction

In the step S36, position correction is performed. More specifically, as shown in (c) FIG. 17, the control apparatus 50 operates the stepper motor 25 to move (raise) the base 23 to the position where the locking pin 24 is brought into contact with the first engaging recess 23a-side wall of the second engaging recess 23b. At this time, the control apparatus 50 adjusts a torque command value to be decreased by the amount of the gravity component Fg2 estimated in advance, and the control apparatus 50 transmits the adjusted torque command value to the stepper motor 25. Accordingly, the hydrogen supply waiting position is corrected.

### [Step S37] Moving to the hydrogen supply starting position

In the step S37, the base 23 is moved from the hydrogen supply waiting position to the hydrogen supply starting position, and the on-off valve 15 is connected to the pushrod 43 to connect the hydrogen tank 11 and the supply flow path 41 with each other. More specifically, as shown in (d) of FIG. 17, the control apparatus 50 operates the stepper motor 25 to move (lower) the base 23 closer to the pushrod 43. Accordingly, the pushrod 43 is inserted in the insert hole 17a of the on-off valve 15 to push the disc 16. At this time, the control apparatus 50 adjusts the torque command value to be decreased by the amount of the gravity component Fg2 estimated in advance, and the control apparatus 50 transmits the adjusted torque command value to the stepper motor 25.

To detach the hydrogen tank 11 from the hydrogen consuming apparatus 20, the steps S31 to S37 are performed in reverse order.

From the foregoing, according to the present disclosure, even in the case of connecting the hydrogen tank from not only the horizontal direction but also from the oblique and vertical directions, a hydrogen supply failure and a hydrogen blocking failure, both of which are due to poor contact between the on-off valve 15 of the hydrogen tank 11 and the second connection part 42 (the pushrod 43) of the hydrogen consuming apparatus 20, are prevented when attaching and detaching the hydrogen tank 11. In addition, the connection control of the present disclosure enables the connection control of the hydrogen tank from the obliquely downward direction and the lower side of the vertical direction.

### Reference Signs List

- 10.: Hydrogen consumption system
- 11.: Hydrogen tank
- 12.: Liner
- 13.: Reinforcing layer
- 14.: Nozzle
- 15.: On-off valve
- 16.: Disc
- 17.: Insert part
- 20.: Hydrogen consuming apparatus
- 21.: Attachment part
- 22.: Housing hole
- 23.: Base
- 24.: Locking pin
- 25.: Stepper motor
- 26.: Position sensor
- 40.: Fuel cell
- 41.: Supply flow path
- 42.: Second connection part
- 43.: Pushrod
- 45.: Injection
- 46.: Pressure sensor
- 50.: Control apparatus
- 51.: CPU
- 52.: RAM
- 53.: ROM
- 54.: Receiving part
- 55.: Transmitting part

## Claims

1. A hydrogen tank connection method for connecting a first connection part of a removable hydrogen tank to a second connection part of a hydrogen consuming apparatus configured to consume hydrogen of the hydrogen tank,
the method comprising an approaching step of disposing the first and second connection parts to face each other in a separated state and a connecting step of connecting the separated first and second connection parts by reducing a distance therebetween after the approaching step,
wherein, in the approaching step and the connecting step, the hydrogen tank is moved in an axial direction of the first and second connection parts by a moving part configured to move the hydrogen tank.

2. The hydrogen tank connection method according to claim 1, wherein the movement of the hydrogen tank in the approaching step and the connecting step is limited by a movement inhibiting member configured to lock the moving part at a predetermined position.

3. The hydrogen tank connection method according to claim 2,
wherein the moving part comprises an engaging recess that is engageable with the movement inhibiting member;
wherein the movement inhibiting member is a locking pin; and
wherein a movement of the moving part is limited by engaging the engaging recess of the moving part and the locking pin together.

4. The hydrogen tank connection method according to claim 1, wherein, when the hydrogen tank is inserted in the hydrogen consuming apparatus and disposed at a hydrogen supply stopping position, the hydrogen tank is moved to and disposed at a hydrogen supply waiting position where, in the approaching step, the first and second connection parts are disposed to face each other in the separated state.

5. The hydrogen tank connection method according to claim 1, wherein, when there is a gravity component in an approach direction of the first connection part to the second connection part, an output of an actuator of the moving part is adjusted in accordance with a size of the gravity component.

6. A hydrogen consumption system comprising a removable hydrogen tank, a hydrogen consuming apparatus configured to consume hydrogen of the hydrogen tank, and a control apparatus,
wherein the hydrogen tank comprises a first connection part;
wherein the hydrogen consuming apparatus comprises a second connection part and a moving part configured to move the hydrogen tank;
wherein the control apparatus performs connection control of the hydrogen tank to the hydrogen consuming apparatus;
wherein the connection control comprises an approaching step of disposing the first and second connection parts to face each other in a separated state and a connecting step of connecting the separated first and second connection parts by reducing a distance therebetween after the approaching step; and
wherein the control apparatus moves the hydrogen tank in an axial direction of the first and second connection parts by the moving part.

7. The hydrogen consumption system according to claim 6,
wherein the hydrogen consuming apparatus comprises a movement inhibiting member configured to lock the moving part at a predetermined position when limiting the movement of the hydrogen tank, and
wherein, in the approaching step, the control apparatus performs lock control to put the hydrogen tank into a locked state by the movement inhibiting member and dispose the first and second connection parts to face each other in a separated state by the locking by the movement inhibiting member.

8. The hydrogen consumption system according to claim 7,
wherein the moving part comprises an engaging recess that is engageable with the movement inhibiting member;
wherein the movement inhibiting member is a locking pin; and
wherein the control apparatus limits a movement of the moving part by engaging the engaging recess of the moving part and the locking pin together.

9. The hydrogen consumption system according to claim 6, wherein, when the hydrogen tank is inserted in the hydrogen consuming apparatus and disposed at a hydrogen supply stopping position, as the approaching step of the connection control, the control apparatus moves the hydrogen tank from the hydrogen supply stopping position to a hydrogen supply waiting position to dispose the first and second connection parts to face each other in a separated state.

10. The hydrogen consumption system according to claim 6, wherein, when there is a gravity component in an approach direction of the first connection part to the second connection part, the control apparatus adjusts an output of an actuator of the moving part in accordance with a size of the gravity component.

11. The hydrogen consumption system according to claim 8,
wherein the moving part comprises, as the engaging recess, a first engaging recess and a second engaging recess in order from closest to the second connection part at a predetermined interval,
wherein a width of the first engaging recess and that of the second engaging recess are larger than a width of the locking pin;
wherein, when the hydrogen tank is inserted in the hydrogen consuming apparatus and the moving part is disposed at the hydrogen supply stopping position, the control apparatus performs an origin point learning step by engaging the locking pin with the first engaging recess; and
wherein, when the moving part is moved to the hydrogen supply waiting position, the control apparatus performs a position correction step by engaging the locking pin with the second engaging recess.

12. The hydrogen consumption system according to claim 11,
wherein the first connection part is an on-off valve, and
wherein the second connection part is a pushrod.
